# EUROPEAN PATENT APPLICATION

(11) **EP 3 247 123 A1**
(43) Date of publication of application: **22.11.2017**
(21) Application number: 16204282.4
(22) Date of filing: 15.12.2016
(51) Int. Cl.: H04N 21/422, H04N 21/485, H04N 5/44, G08C 19/00, G08C 17/02

(54) **IMAGE PROCESSING TERMINAL FOR PERFORMING A DIFFERENT OPERATION ACCORDING TO A FORCE INPUT AND UPGRADE OF SOFTWARE AND METHOD FOR UPGRADING THE SOFTWARE**

(30) Priority: 16.05.2016 KR 20160059592
(71) Applicant: Humax Co., Ltd., Yongin-si, Gyeonggi-do 17040 (KR)
(72) Inventor: PARK, Sung Heum, 16975 Yongin-si, Gyeonggi-do (KR)
(74) Representative: Zardi, Marco

(57) **Abstract**

An image processing terminal for performing a different operation according to a force input and upgrade of software and a method of upgrading the software are disclosed. The image processing terminal comprises a processor, a memory connected to the processor and a communication unit configured to receive a control signal having information concerning a force input from a remote controller or receive control command information and updated control command information from a computer processing device or a storage device, according to a selection of a key by a user. Here, the memory stores program commands by which the processor performs different operations or different screens according to the control command information or the updated control command information though the control signal corresponding to the force input to the same key is received from the remote controller.

## Description

### BACKGROUND

### 1. Field of the Invention

The present disclosure relates to an image processing terminal and a method for upgrading software, and more particularly relates to a technique for performing a different operation according to a force input and upgrading of the software.

### 2. Description of the Related Art

A set-top box is connected to a television, converts properly a video signal and a voice signal received from an external device and displays an image corresponding to the converted video and voice signal through the television.

The set-top box receives an IPTV signal, a cable TV signal, a satellite TV signal or a general signal for broadcasting, and the set-top box displays the received signal on the television.

The set-top box generally interoperates with a wired or wireless controller. A user remotely controls the set-top box with the remote controller.

Functions of the set-top box or the television are diversified as types of contents and services provided from an IPTV, a cable TV or a satellite TV have been diversified. The number of buttons or keys in the remote controller controlling the set-top box or the television has increased due to the diversification of the functions.

It is preferable to provide various contents and services to the user, but the user need to know a function of each button in the remote controller in order to fully enjoy the various contents and services provided.

It becomes difficult for the user to control the remote controller with keeping the user's eyes toward the television (blind control) because the remote controller has lots of buttons or keys. Additionally, there are many factors distracting user's view when the user controls the remote controller. For example, the user should look at the remote controller and select a relevant button whenever the user wants to properly control the remote controller.

A method for controlling the remote controller having few or not button is needed while allowing a user to enjoy a variety of contents and services.

### SUMMARY

The invention has been made to address at least the disadvantages and problems described above, and to provide at least the advantage described below. An aspect of the invention provides a technique for allowing a user to enjoy a variety of contents services by controlling the remote controller having few or not button.

According to one embodiment of the invention, an image processing terminal comprises a processor; a memory connected to the processor; and a communication unit configured to receive a control signal having information concerning a force input from a remote controller or receive control command information and updated control command information from a computer processing device or a storage device, according to a selection of a key by a user. Here, the memory stores program commands by which the processor performs different operations or different screens according to the control command information or the updated control command information though the control signal corresponding to the force input to the same key is received from the remote controller. The force input means an input applied to the key of the remote controller with a higher pressure or a wider area than a pressure or an area of a normal input, and the image processing terminal executes a different operation or a different screen according to the updated control command information, without updating a software of the remote controller, when the same force input is applied to a specific key of the remote controller.

According to another embodiment of the invention, an image processing terminal comprises a processor; a memory connected to the processor; and a communication unit configured to receive a control signal having information concerning a force input from a remote controller or receive control command information and updated control command information from a computer processing device or a storage device, according to a selection of a key by a user. Here, the memory stores program commands by which the processor executes an operation or a screen corresponding to one of a navigation key, a function key or a decision key according to the control command information about a specific key of the remote controller, and executes an operation or a screen corresponding to a key different from a key corresponding to the control command information according to the updated control command information. The force input means an input applied to the key of the remote controller with a higher pressure or a wider area than a pressure or an area of a normal input, and the image processing terminal executes the operation or the screen corresponding to the key different from the key corresponding to the control command information according to the updated control command information, without updating a software of the remote controller, when the same force input is applied to the specific key of the remote controller.

According to still another embodiment of the invention, an image processing terminal comprises a processor; a memory connected to the processor; and a communication unit configured to receive a control signal having information about a selection of a key by a user from a remote controller of which a software is not upgraded. Here, the memory stores program commands by which the processor matches a specific key of the remote controller with a different function, a different screen or a different application of the image processing terminal and executes a different operation, a different screen or a different application about control signals having information corresponding to the same key transmitted from the remote controller, according to upgrade of a software of the image processing terminal.

According to one embodiment of the invention, a method for upgrading a software including a control command about a key of a remote controller in an image processing terminal, the method comprising: receiving control command information and updated control command information from a computer processing device or a storage device; and executing different operations or different screens according to the control command information or the updated control command information, though a control signal corresponding to a force input of the same key is received from the remote controller. Here, the force input means an input applied to the key of the remote controller with a higher pressure or a wider area than a pressure or an area of a normal input, and the image processing terminal executes a different operation or a different screen according to the updated control command information, without updating a software of the remote controller, when the same force input is applied to a specific key of the remote controller.

In one embodiment, the invention may provide a variety of contents services by using a remote controller having few or not button.

A number of buttons in the remote controller may not increase, but minimal number of the buttons may be maintained in the remote controller.

Effect of the invention is not to effect mentioned above, and may include every effect capable of being inferred from description or claims of the invention.

### BRIEF DESCRIPTION OF DRAWINGS

The aspects, features, advantages and embodiments of the invention will be more apparent from the following detailed description taken in conjunction with reference to the accompanying drawings, in which:
FIG. 1 is a view illustrating a media system according to one embodiment of the invention;
FIG. 2 is a view illustrating a remote controller according to one embodiment of the invention;
FIG. 3 and FIG. 4 are views illustrating constitution and operations of the image processing terminal according to one embodiment of the invention;
FIG. 5 is a view illustrating a screen of the image processing terminal according to one embodiment of the invention;
FIG. 6 is a view illustrating a screen of the image processing terminal according to another embodiment of the invention; and
FIG. 7 is a view illustrating a screen of the image processing terminal according to still another embodiment of the invention.

### DETAILED DESCRIPTION

In the present specification, an expression used in the singular encompasses the expression of the plural unless it has a clearly different meaning in the context.

In the present specification, terms such as "comprising" or "including," etc., should not be interpreted as meaning that all of the elements or operations are necessarily included. That is, some of the elements or operations may not be included, while other additional elements or operations may be further included.

Also, terms such as "unit," "module," etc., as used in the present specification may refer to a part for processing at least one function or action and may be implemented as hardware, software, or a combination of hardware and software.

Hereinafter, various embodiments of the invention will be described in detail with reference to accompanying drawings.

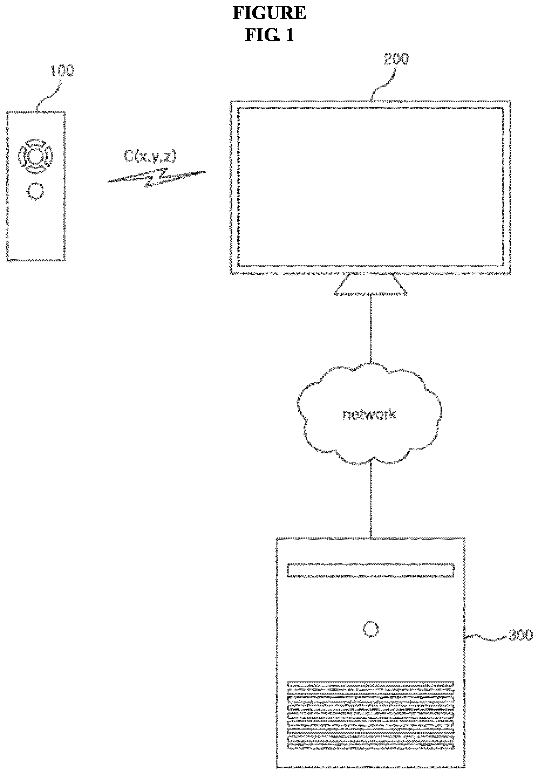

FIG. 1 is a view illustrating a media system according to one embodiment of the invention.

The media system of the present embodiment may include a remote controller 100, an image processing terminal 200 and a server 300, e.g. a cloud server.

Here, the server 300 processes various data by using a processor, and thus it can be referred to as a computer processing device.

The remote controller 100 includes at least one key for controlling the image processing terminal 200 (including hardware control and software control), and transmits a control signal in response to a sensing level of a key selected by a user to the image processing terminal 200.

In this case, the image processing terminal 200 may perform different operations according to the sensing levels of the key.

Here, the sensing level of the key corresponds to a pressure applied (touched) to the key of the remote controller 100 by the user. Keys in the remote controller 100 may be matched with a three dimensional coordinate.

If the three dimensional coordinate is expressed with (x, y, z), the sensing level may be defined as a coordinate (z) in a direction vertical to a plane of the key.

The sensing level may depend on the area of the key pressed (touched) with the pressure, and uses a coordinate(x, y) in the three dimensional coordinate. Of course, the sensing level corresponding to the area may be expressed with the coordinate(z).

Accordingly, both the coordinate of the selected key and the sensing level may be expressed in a three-dimensional coordinate (x, y, z).

However, other methods may be used to express the coordinate and the sensing level of the selected key.

Hereinafter, it is assumed that the sensing level is determined by using the coordinate(z) of the three dimensional coordinate, i.e. the pressure applied to the key by the user.

The remote controller 100 may transmit a control signal (hereinafter, referred to as "C(x, y, z)") including a coordinate(x, y, z) of corresponding key to the image processing terminal 200, when the user selects a key with a specific sensing level.

If a value of the coordinate (z) of the selected key by the user (i.e. pressure applied to the key by the user) is smaller than a predetermined reference value, the image processing terminal 200 may determine an input corresponding to the value as a normal input. If the value of the coordinate (z) of the selected key by the user is more than the predetermined reference value, the image processing terminal 200 may determine an input corresponding to the value as a force input for selecting the key with further pressure or area. Accordingly, the image processing terminal 200 may perform different operations according to the pressure applied to the same key by the user.

The key of the remote controller 100 may be implemented by hardware including dome key type, or implemented by software.

On the other hand, if a new function is further provided to the remote controller 100, extra physical key is added to the remote controller for the purpose of performing the new function, in the conventional technique. In addition, software of an image processing terminal, which receives a control signal from the remote controller and processes the received control signal, should be changed for the control signal of the added key.

Accordingly, a design and a mold, etc. for the remote controller must be altered in view of manufacture, and thus much amount of cost has been expensed. As a result, this puts a heavy burden to a businessman.

However, if the remote controller 100 transmits only the control signal corresponding to a key selected by a user to the image processing terminal 200 and the image processing terminal 200 alters an operation in response to the transmitted control signal when it is needed, a variety of functions may be performed by using the remote controller 100 having few key, without adding an extra physical key to the remote controller 100.

For example, if an A function corresponding to a specific key of the remote controller 100 has not been used in recent, a command corresponding to the specific key may be changed to perform a recent B function not the A function when the remote controller 100 receives the control signal corresponding to the specific key.

That is, though the remote controller 100 transmits the control signal in response to the same key selected by the user to the image processing terminal 200, the image processing terminal 200 may perform the B function not the A function.

On the other hand, the image processing terminal 200 may be a display device such as a television (TV) for displaying an image or a device such as a set-top box for transmitting an image signal to the display device.

That is, the image processing terminal 200 is not limited as a specific device as long as it processes the image. The image processing terminal 200 may be the set-top box or a television having a function of the set-top box.

The image processing terminal 200 may receive the control signal C(x, y, z) about the key selected by the user from the remote controller 100, and determine the sensing level of the key from the received control signal.

In the event that the sensing level is determined to be the force input, the image processing terminal 200 may perform a different operation of the key according to a type of tasks displayed on the present screen, an identifier of the key and a control command corresponding to the identifier of the key. The different operation may be a change of an entity displayed on the screen or a scene transition of contents, etc.

Here, the entity may include a user interface such as a menu, a button and an icon of an executable application, etc. and contents such as an image, a moving picture and so on. The change of the entity may include at least one of a change of the type of the entity, the size of the entity, the number of the entity, or a change of arrangement displayed on the screen according to the size or the number.

The scene transition of the contents may include a transition of the screen in whole or in part into another screen according to a display of detailed information about the contents, a preview of contents selected or contents recently used.

The image processing terminal 200 may store control commands of the normal input and the force input about each of the keys in the remote controller 100 in a storage unit.

Here, information stored in the storage unit (hereinafter, referred to as control command information about each of the keys) may be a control command in accordance with the identifier of the keys and the kind of the task, the control command being performed when the normal or the force input is applied to the key.

The image processing terminal 200 determines the sensing level of a specific key as mentioned above, if it receives the control signal in response to the specific key from the remote controller 100. The image processing terminal 200 may extract a control command from the control command information stored in the storage unit based on the kind of the task being executed on the present screen, the identifier of the specific key and the determined sensing level, and execute the extracted control command.

The image processing terminal 200 may self-determine the kind of the task being executed on the present screen.

The image processing terminal 200 may receive updated control command information about the keys from the server 300 and store the received updated control command information.

That is, if the updated control command information is provided from the server 200, the image processing terminal 200 updates the control command information about the key stored in the storage unit.

In this case, the image processing terminal 200 may perform a control command different from a control command before the updating according to the updated control command information, though the remote controller 100 transmits the control signal about the same key to the image processing terminal 200.

The image processing terminal 200 may output the updated control command information on the screen, when the control command information about the key is updated.

The image processing terminal 200 may notify the updating of the control command information about the key to the user through the screen, before a control command corresponding to the sensing level of the key is performed, when it receives the control signal corresponding to the key related to the updating from the remote controller 100.

Here, a function of notifying the updating of the control command information may be set by the user.

Here, the control command information about every updated key or the control command information about a selected updated key may be provided, according to a user's setting.

On the other hand, the server 300 may transmit the control command information about the updated key to the image processing terminal 200.

Here, the sever 300 may manage the control command information about the key depending on the image processing terminal 200 and the remote controller 100 connected to the image processing terminal 200.

The server 300 may be connected to the image processing terminal 200 through a wireless network or a wire network.

The server 300 may be connected to a manager terminal (not shown) through a wireless network or a wire network. The server 300 may add, amend or delete the control command information about the key in response to a management request received from the manager terminal.

In brief, the software of the image processing terminal 200 may be updated, but software of the remote controller 100 may not be updated. In this case, the remote controller 100 transmits for example the control signal including only a touch coordinate to the image processing terminal 200, and the image processing terminal 200 may perform an operation according to the received control signal.

Though the same force input is applied to a specific key of the remote controller 100 and the remote controller 100 transmits the control signal including the coordinate of the specific key to the image processing terminal 200, the image processing terminal 200 may perform a different operation according to its software. That is, the image processing terminal 200 may perform the different operation though the software of the remote controller 100 is not updated. Accordingly, the remote controller 100 may have simple structure. Additionally, the remote controller 100 may execute various operations with low manufacture cost.

In the above description, the software of the image processing terminal 200 is updated according to the software downloaded from the server 300. However, an update file may be downloaded from a storage device to the image processing terminal 200 while the storage device such as an external hard, a disk, etc. is connected to the image processing terminal 200.

On the other hand, whole software of the image processing terminal 200 may be updated or only a part related to the key of the remote controller 100 of the software may be updated.

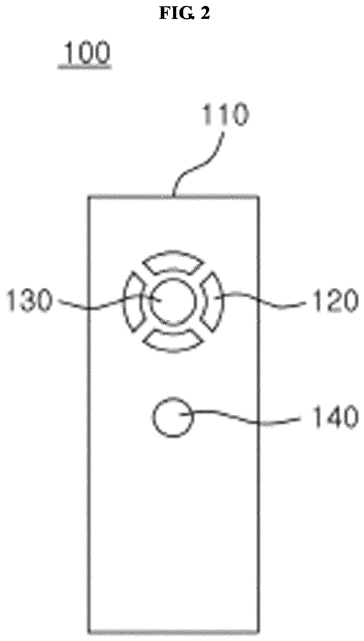

FIG. 2 is a view illustrating a remote controller according to one embodiment of the invention.

In FIG. 2, the remote controller 100 may comprise a body 110, a navigation key 120 including up, down, left, or right directional keys, a function key 130 for performing a variety of operations such as an esc key and a home key, and a decision key 140 for performing an operation such as an OK key. The navigation key 120, the function key 130 and the decision key 140 are formed on the body 110.

On the other hand, various keys may exist in the remote controller 100, but these keys may be classified as the navigation key 120, the function key 130 and the decision key 140.

The remote controller 100 may be connected to the image processing terminal 200 via a wireless communication, and control the operations of the image processing terminal 200.

For example, the remote controller 100 may control a program guide (EPG) displayed on the image processing terminal 200 (e.g., the television).

In one embodiment, a function related to two or more operations of the image processing terminal 200 may be set to at least one of the keys in the remote controller 100.

Particularly, the remote controller 100 may transmit a control signal to the image processing terminal 200. The control signal for performing different operations may be generated according to pressure or an area applied to the key by a touch means such as a finger and any input device.

Here, the remote controller 100 may transmit the control signal C(x, y, z) to the image processing terminal 200. The control signal includes the three dimensional coordinate in accordance with the pressure applied to the key by the user.

For example, when the user presses the navigation key 120 corresponding to a right directional key with a normal input, the remote controller 100 may transmit a control signal C1 having a coordinate(x, y, z1) corresponding to the normal input to the image processing terminal 200.

In the event that a pressure higher than a pressure in the normal input, i.e. the force input is applied to the same navigation key 120, the remote controller 100 may transmit a control signal C2 having a coordinate(x, y, z2) to the image processing terminal 200.

Subsequently, the image processing terminal 200 may perform different operations or screens according to the control signal C1 or C2 received from the remote controller 100.

For example, the image processing terminal 200 may perform an operation of displaying a program guide according to the first control signal C1, and perform an operation of displaying a list of recommendation programs in response to the second control signal C2.

That is, the image processing terminal 200 may perform different operations or different screens according to the sensing levels corresponding to the pressure applied to the same key of the remote controller 100 by the user.

Here, the image processing terminal 102 displays the program guide on a screen if it is the television. The image processing terminal 102 transmits an image signal related to the program guide to the television if it is the set-top box.

Hereinafter, the normal input and the force input will be described in detail.

The normal input means a general input pressed or touched by a user. In this case, a general operation set to the key of the remote controller 100 is performed as similarly as an operation of the key in a conventional remote controller. The force input means an input to the key when the key is pressed or touched with higher pressure or a wider area than those of the normal input.

Though a long press is applied under the normal input, the long press may not be regarded as the force input but be recognized as the normal input.

On the other hand, the remote controller 100 may transmit a control signal including direct command requesting to operate a specific function to the image processing terminal 200. However, the remote controller 100 may also transmit the control signal including the three dimensional coordinate(x, y, z) corresponding to the key selected by the user to the image processing terminal 200.

In this time, an operation related to the three dimensional coordinate(x, y, z) may be determined by the image processing terminal 200.

Accordingly, though the remote controller 100 transmits the same three dimensional coordinate to the image processing terminal 200, the image processing terminal 200 may perform different operations according to the control command information about the key stored in the storage unit. Here, the control command information may be updated when it is needed.

The force input may be classified to a force up and a force down.

In one embodiment, the force up may be set when the force input is applied to an up directional key as the navigation key 210, and the force down may be set when the force input is applied to a down directional key as the navigation key 210.

For example, in a home screen, a recommendation program may be displayed on the image processing terminal 102 when the force input is applied to the up directional key, and a Video on Demand (VOD) list may be displayed on the image processing terminal 102 when the force input is applied to the down directional key.

In this case, the recommendation program may be displayed when the force input is applied to the up directional key in the home screen, the screen displaying the recommendation program is returned to the home screen when the force input is applied to the down directional key, and then the VOD list may be displayed when the force input is applied to the down directional key in the home screen.

In another embodiment, the force up may be set when the sensing level reaches a first sensing level applied to a key, and the force down may be set when the sensing level reaches a second sensing level applied to the same key.

That is, the input may be divided into the normal input and the force input according to the pressure applied to the key by the user. The force input may be subdivided into a plurality of sensing levels.

Hereinafter, it is assumed that the force input is subdivided to the first sensing level and the second sensing level, for convenience for description.

For example, a recommendation program may be displayed when corresponding sensing level becomes the first sensing level as the force input is applied to the decision key 140 while a home screen is being displayed. A VOD list may be displayed when the sensing level becomes the second sensing level as the force input is applied to the decision key 140.

In this case, the recommendation program may be displayed when the sensing level becomes the first sensing level as the force input is applied to the decision key 140 while the home screen is being displayed. Subsequently, a screen on which the recommendation program is displayed may be returned to the home screen when the sensing level becomes the second sensing level as the force input is applied to the decision key 140.

Then, the VOD list may be displayed in the event that the second sensing level is continuously kept as the force input is applied to the decision key 140 while the home screen is being displayed. Next, a screen on which the VOD list is displayed may be returned to the home screen when the sensing level is changed to the first sensing level as the force input is applied to the decision key 140.

In short, the remote controller 100 of the present embodiment determines the sensing level based on the pressure or the area applied to the key by the user and transmits the control signal including the information concerning the determined sensing level to the image processing terminal 200. The image processing terminal 200 may perform different operations or different screens according to the sensing levels, included in the received control signal, of the same key.

On the other hand, the coordinate of the key is expressed in the three dimensional coordinate (x, y, z), but it may be expressed as a four dimensional coordinate (x, y, z, t) in consideration of a time pressed to the key. That is, one or more parameters related to the sensing level may exist.

In this case, the control command information may further include the time touched or pressed to the key.

If the remote controller 100 of the invention is compared with a conventional remote controller, the conventional remote controller includes normal input only, and only one function may be matched with one key.

Accordingly, a number of keys increase whenever a function is added in the conventional remote controller. As a result, the structure of the conventional remote controller have become complicated and caused inconvenience to users.

Whereas, there may be the normal input and the force input to one key according to the sensing level in the remote controller 100. The force input may be subdivided into a plurality of sensing levels, and thus a plurality of functions may be matched with one key.

In the event that the control command information about the key is updated when it is needed, a variety of functions may be performed though the remote controller 100 has few key or not key.

The functions performed by the remote controller 100 having few keys may be expanded.

Accordingly, since a number of keys in the remote controller 100 are minimized, the remote controller 100 may have a simple structure and it is convenient for the user to use the remote controller 100.

On the other hand, a function in response to the force input of the navigation key 120 such as the up key may function as the function key 130 or the decision key 140.

For example, in the event that the force input is applied to the navigation key 120, the force input may function as the home key or the esc key.

Of course, the force input to the function key 130 may operate as the navigation key 120 or the decision key 140. The force input to the decision key 140 may operate as the navigation key 120 or the function key 130.

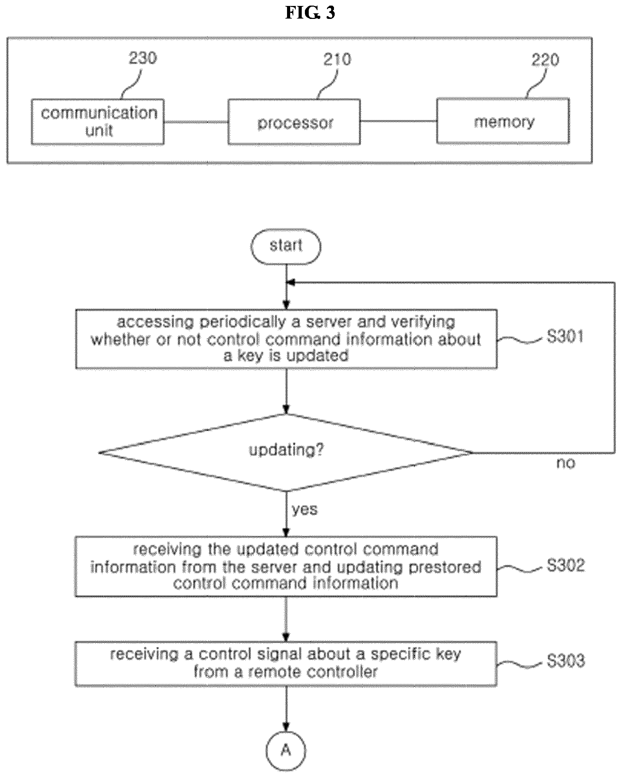

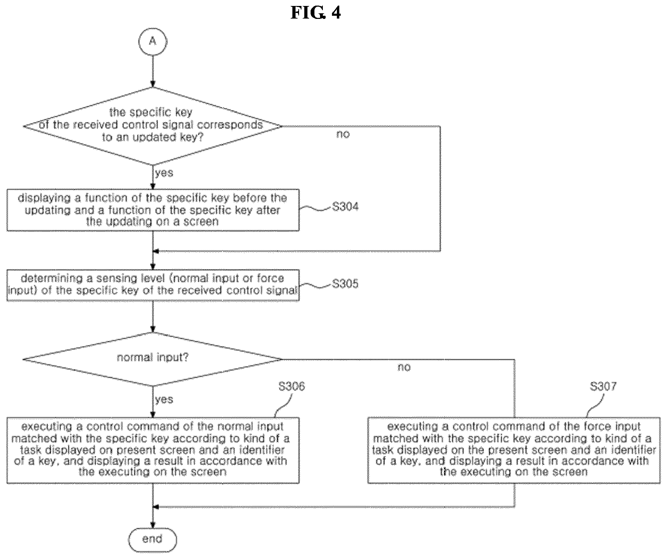

FIG. 3 and FIG. 4 are views illustrating constitution and operations of the image processing terminal according to one embodiment of the invention.

The image processing terminal 200 of the present embodiment may include a processor 210, a memory 220 connected to the processor 210 and a communication unit 230 communicating with the remote controller 100.

The memory 220 may store program commands, about an operation described below, executable by the processor 210

Hereinafter, an operation of the image processing terminal 200 including the above elements will be described in detail.

In a step of S301, the image processing terminal 200 periodically accesses the sever 300 and verifies whether or not the control command information about the key is updated.

In a step of S302, in the event that it is verified that the control command information is updated, the image processing terminal 200 receives the updated control command information about the key from the server 300 and stores the received updated control command information. That is, the image processing terminal 200 updates the pre-stored control command information about the key.

In a step of S303, the image processing terminal 200 receives a control signal about a specific key from the remote controller 100.

In a step of S304, the image processing terminal 200 determines whether or not the specific key of the received control signal is updated, and displays a function of the specific key before the updating and a function of the specific key after the updating on the screen.

In a step of S305, the image processing terminal 200 verifies whether a sensing level of the control signal is smaller than or more than a predetermined value, and determines whether the sensing level corresponds to the normal input or the force input.

In a step of S306, the image processing terminal 200 executes a control command of the normal input matched with the specific key according to kind of a task displayed on a present screen and an identifier of the key, and displays a result in accordance with the executing on a screen, in the event that it is verified that the sensing level corresponds to the normal input.

In a step of S307, the image processing terminal 200 executes a control command of the force input matched with the specific key according to kind of a task displayed on the present screen and an identifier of the key, and displays a result in accordance with the executing on the screen, in the event that it is verified that the sensing level corresponds to the force input.

In the event that the force input is subdivided depending on the pressure touched or pressed to the specific key, the image processing terminal 200 may execute a control command corresponding to the pressure and display a result in accordance with the executing on the screen.

Furthermore, a time (touch time) touching or pressing the key may be reflected in addition to the pressure in the force input.

Accordingly, an operation performed in the image processing terminal 200 according to the specific key of the remote controller 100 may be determined depending on the normal input or the force input. The operation may be determined according to the pressure applied to the key by the user in the force input, and be also determined by further reflecting the time touching the key.

As a result, a plurality of functions may be matched with one key, and thus a number of the keys in the remote controller 100 may be minimized.

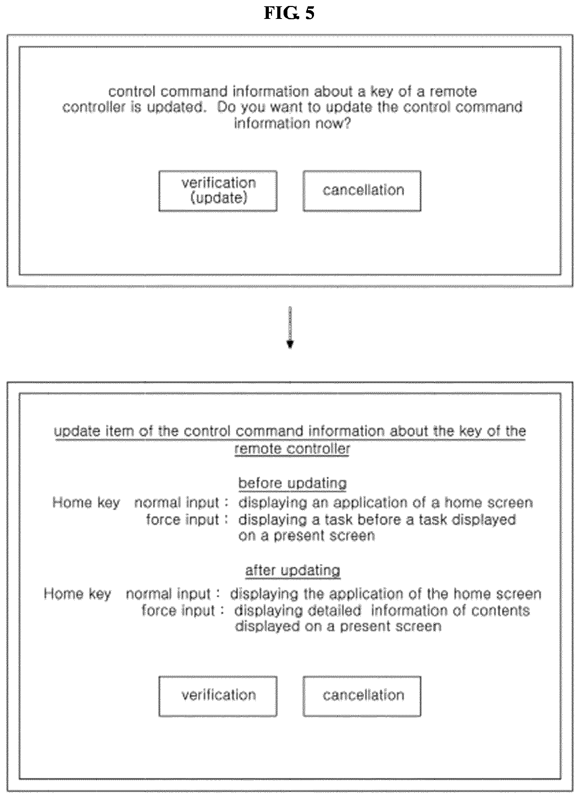

FIG. 5 is a view illustrating a screen of the image processing terminal according to one embodiment of the invention.

In FIG. 5, the image processing terminal 200 may periodically access the server 300, and verify whether or not control command information about the key is updated. The image processing terminal 200 may display the fact that updated control command information about the key exists on a screen.

Here, the updated control command information may be displayed on the screen as shown in FIG. 5 when it is verified that the control command information about the key is updated after the image processing terminal 200 periodically accesses the server 300. Or, the updated control command information may be displayed on the screen as shown in FIG. 5 when the image processing terminal 200 receives information, that the updated control command information exists, from the server 300(for example, cloud server).

In this time, the image processing terminal 200 may be outputting contents or a broadcasting program on the screen, or be an on state where a signal for a specific operation is received from the remote controller 100 in a standby mode.

In the event that a verification signal about the updating is received from the remote controller 100, the image processing terminal 200 may receive the updated control command information about the key from the server 300, store the received updated control command information, and display whole of the updated control command information about the key on the screen as shown in FIG. 5.

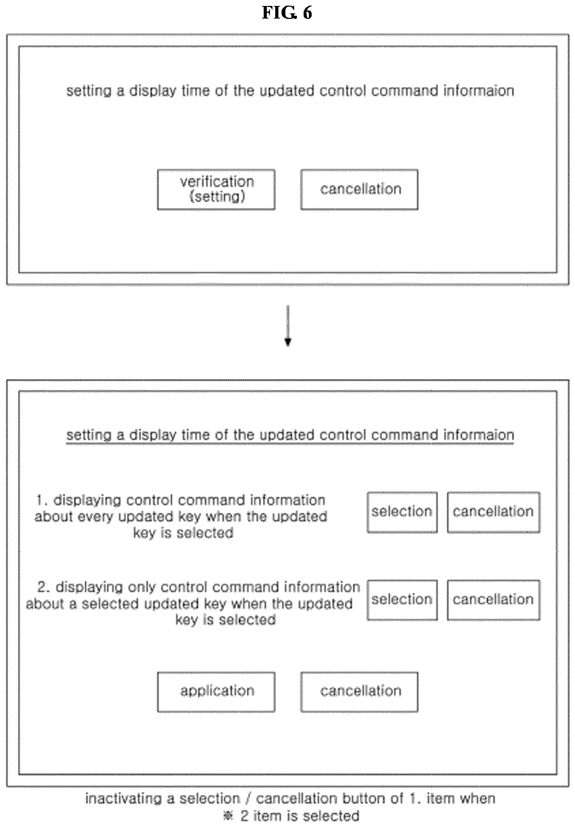

FIG. 6 is a view illustrating a screen of the image processing terminal according to another embodiment of the invention.

In FIG. 6, the image processing terminal 200 receives the updated control command information about the key from the server 300, and stores the received updated control command information. The user sets a display time of the updated control command information.

The image processing terminal 200 may display control command information about every key before the updating and the updated control command information about every key after the updating, or display control command information about a selected key before the updating and the updated control command information about the selected key after the updating, according to a user's setting, when an updated key is selected in the remote controller 100.

The image processing terminal 200 may set the display time of the updated control command information according to the user's setting. In addition, the image processing terminal 200 may set whether it extends the display time of the control command information or stops the displaying of the control command information, according to the user's setting.

In the event that the extension or the stopping is selected, a selection button and a cancellation button of an item not selected may be inactivated, and so it is impossible to select the item not selected.

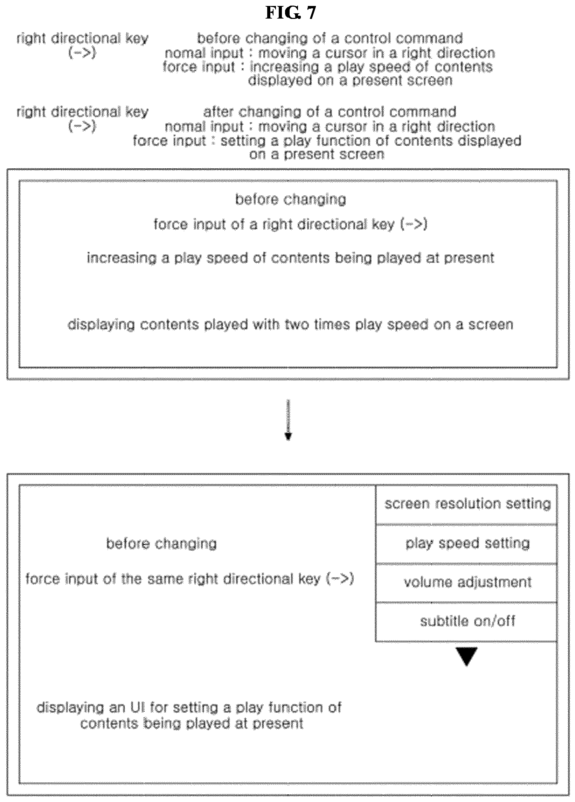

FIG. 7 is a view illustrating a screen of the image processing terminal according to still another embodiment of the invention.

FIG. 7 shows a change of a function before updating of the control command and a function after the updating of the control command, when the force input is applied to the navigation key 120 which is the directional key.

A right key of the navigation key 120 may play rapidly contents being played at preset when the force input is applied thereto before the updating of the control command. Whereas, the right key may operate as the function key 130 for displaying a user interface, which can set playing of the contents being played at present, when the force input is applied thereto after the updating of the control command.

The control command may be updated so that the force input about the function key 130 of the remote controller 100 may operate as the navigation key 120 or the decision key 140. The control command may be updated so that the force input about the decision key 140 may operate as the navigation key 120 or the function key 130.

Components described in the embodiments above can be easily understood from the perspective of processes.

That is, each component can also be understood as an individual process. Likewise, processes in the embodiments described above can be easily understood from the perspective of components.

Also, the technical features described above can be implemented in the form of program instructions capable of being performed by means of various computer means and can be recorded in a computer-readable medium.

Such a computer-readable medium can include program instructions, data files, data structures, etc., alone or in combination.

The program instructions recorded on the medium can be designed and configured specifically for the present invention or can be a type of medium known to and used by the skilled person in the field of computer software.

Examples of the computer-readable medium may include magnetic media such as hard disks, floppy disks, magnetic tapes, etc., optical media such as CD-ROM's, DVD's, etc., magneto-optical media such as floptical disks, etc., and hardware devices such as ROM, RAM, flash memory, etc.

Examples of the program instructions may include not only machine language codes produced by a compiler but also high-level language codes that can be executed by a computer through the use of an interpreter, etc.

The hardware mentioned above can be made to operate as one or more software modules that perform the actions of the embodiments of the invention, and vice versa.

The embodiments of the invention described above are disclosed only for illustrative purposes. A person having ordinary skill in the art would be able to make various modifications, alterations, and additions without departing from the spirit and scope of the invention, but it is to be appreciated that such modifications, alterations, and additions are encompassed by the scope of claims set forth below.

### [Description of reference numbers]

- 100 :: remote controller
- 110 :: body
- 120 :: navigation key
- 130 :: function key
- 140 :: decision key
- 200 :: image processing terminal
- 210 :: processor
- 220 :: memory
- 230 :: communication unit

## Claims

1. An image processing terminal, comprising:
a processor;
a memory connected to the processor; and
a communication unit configured to receive a control signal having information concerning a force input from a remote controller or receive control command information and updated control command information from a computer processing device or a storage device, according to a selection of a key by a user,
wherein the memory stores program commands by which the processor performs different operations or different screens according to the control command information or the updated control command information though the control signal corresponding to the force input to the same key is received from the remote controller,
the force input means an input applied to the key of the remote controller with a higher pressure or a wider area than a pressure or an area of a normal input, and the image processing terminal executes a different operation or a different screen according to the updated control command information, without updating a software of the remote controller, when the same force input is applied to a specific key of the remote controller.

2. The image processing terminal of claim 1, wherein the memory stores program commands, executable by the processor, which display the updated control command information about the key on a screen according to the control signal about the specific key received from the remote controller,
wherein control command information before the updating and the updated control command information are displayed on the screen.

3. The image processing terminal of claim 2, wherein the memory stores program commands, executable by the processor, which verifies whether or not the control command information corresponding to the received control signal about the specific key is updated, when the control signal about the specific key is received from the remote controller, and
display control command information about every updated key or control command information about only the specific key corresponding to the received control signal on the screen, when it is verified that the control command information is updated.

4. The image processing terminal of claim 2, wherein the memory stores program commands, executable by the processor, which provide a user interface for setting a display time for displaying the updated control command information, and
display the updated control command information during the display time set through the user interface, according to the control signal about the specific key received from the remote controller.

5. An image processing terminal, comprising:
a processor;
a memory connected to the processor; and
a communication unit configured to receive a control signal having information concerning a force input from a remote controller or receive control command information and updated control command information from a computer processing device or a storage device, according to a selection of a key by a user,
wherein the memory stores program commands by which the processor executes an operation or a screen corresponding to one of a navigation key, a function key or a decision key according to the control command information about a specific key of the remote controller, and executes an operation or a screen corresponding to a key different from a key corresponding to the control command information according to the updated control command information,
the force input means an input applied to the key of the remote controller with a higher pressure or a wider area than a pressure or an area of a normal input, and the image processing terminal executes the operation or the screen corresponding to the key different from the key corresponding to the control command information according to the updated control command information, without updating a software of the remote controller, when the same force input is applied to the specific key of the remote controller.

6. An image processing terminal, comprising:
a processor;
a memory connected to the processor; and
a communication unit configured to receive a control signal having information about a selection of a key by a user from a remote controller of which a software is not upgraded,
wherein the memory stores program commands by which the processor matches a specific key of the remote controller with a different function, a different screen or a different application of the image processing terminal and executes a different operation, a different screen or a different application about control signals having information corresponding to the same key transmitted from the remote controller, according to upgrade of a software of the image processing terminal.

7. A method for upgrading a software including a control command about a key of a remote controller in an image processing terminal, the method comprising:
receiving control command information and updated control command information from a computer processing device or a storage device; and
executing different operations or different screens according to the control command information or the updated control command information, though a control signal corresponding to a force input of the same key is received from the remote controller,
wherein the force input means an input applied to the key of the remote controller with a higher pressure or a wider area than a pressure or an area of a normal input, and the image processing terminal executes a different operation or a different screen according to the updated control command information, without updating a software of the remote controller, when the same force input is applied to a specific key of the remote controller.

8. A computer program stored in a recording medium including a series of commands for executing the method of claim 7.
